Europäisches Patentamt

European Patent Office

Office européen des brevets

(19)

(11) Numéro de publication: **0 181 256**
**A1**

(12) **DEMANDE DE BREVET EUROPEEN**

(21) Numéro de dépôt: **85402058.3**

(22) Date de dépôt: **23.10.85**

(51) Int. Cl.⁴: **A 01 B 33/08**
**F 16 H 57/02**

(30) Priorité: **02.11.84 FR 8416755**

(43) Date de publication de la demande:
**14.05.86 Bulletin 86/20**

(84) Etats contractants désignés:
**DE GB IT**

(71) Demandeur: **KONGSKILDE FRANCE**
**Avenue Ampère Zone Industrielle**
**F-45802 Saint-Jean-de-Braye(FR)**

(72) Inventeur: **Boudin, Jean-Pierre**
**584 rue de Bransles**
**F-45560 Saint Denis en Val(FR)**

(74) Mandataire: **Lepeudry-Gautherat, Thérèse et al,**
**ARMENGAUD JEUNE CABINET LEPEUDRY 23 boulevard**
**de Strasbourg**
**F-75010 Paris(FR)**

(54) **Transmission mécanique polyvalente à roues dentées ou à poulies notamment pour machines agricoles.**

(57) La transmission est composée d'un boîtier inférieur (101) symétrique destiné à entraîner un outil, et d'un boîtier supérieur (100) comprenant des arbres frontaux (1) et latéraux (3) destinés à être reliés à une prise de force, ce boîtier supérieur pouvant être retourné de 180° et de façon symétrique par rapport au boîtier inférieur (101) pour adapter la transmission à différentes utilisations.

Fig. 3

La présente invention concerne une transmission mécanique polyvalente notamment pour des machines agricoles entraînées par la prise de force d'un tracteur.

Actuellement sur ce type de machines agricoles, la transmission mécanique est adaptée à l'utilisation spécifique de l'outil que comporte la machine à la fois dans sa fonction et dans sa puissance. Les changements de cinématique ou de fonction obligent à reconsidérer l'ensemble mécanique tant dans la forme que dans les dimensions.

Cette sujétion entraîne la multiplication de types de transmission tant en fonction de l'outil que du tracteur et par là même a pour conséquence d'obliger à stocker un grand nombre de types de transmission.

Aussi un but de la présente invention est-il de fournir une transmission mécanique qui permet de pallier les inconvénients énoncés ci-dessus.

Un autre but de l'invention est de fournir une telle transmission qui permet une standardisation maximale à la fois dans une gamme d'outils de toutes les puissances et dans l'utilisation de ceux-ci.

Ces buts ainsi que d'autres qui apparaîtront par la suite, sont atteints par une transmission mécanique polyvalente à roues dentées ou à poulies, notamment pour des machines agricoles entraînées par la prise de force d'un tracteur, qui est constituée de deux boîtiers superposés, assemblés l'un à l'autre de façon démontable par leurs semelles respectives, les semelles présentant une ouverture centrale ; le boîtier inférieur comprend un ensemble de pignons ou poulies coopérant entre eux, qui sont tous disposés dans un plan commun ou plan de symétrie du boîtier inférieur, le pignon de sortie de cet ensemble de pignons étant accessible des deux côtés du plan de symétrie pour être relié à deux rotors d'outils à entraîner, et la semelle du boîtier inférieur étant perpendiculaire à un axe de symétrie qui passe par les axes de rotation d'un pignon d'entrée et du pignon de sortie du boîtier ; le boîtier supérieur comporte un arbre d'entrée qui est parallèle à la semelle du boîtier et au plan de symétrie du boîtier inférieur, l'arbre d'entrée étant saillant à l'extérieur du boîtier supérieur par ses deux extrémités et coopérant avec un ou plusieurs arbres parallèles au premier et disposés successivement en aval par l'intermédiaire de roues dentées, les roues dentées étant démontables et permutables à partir de l'extérieur du boîtier afin d'obtenir, à partir d'une pluralité de vitesses de rotation de l'arbre d'entrée, une vitesse de rotation sensiblement constante du dernier desdits arbres parallèles ; le boîtier supérieur comporte en outre un arbre intermédiaire disposé en aval du dernier arbre parallèle et coopérant avec lui, qui est perpendiculaire au plan de symétrie du boîtier inférieur et qui est saillant à l'extérieur du boîtier supérieur par une extrémité ; le boîtier supérieur comporte encore une roue dentée de sortie disposée sur l'arbre intermédiaire ou en aval de celui-ci, pour coopérer avec le pignon d'entrée du boîtier inférieur au travers des ouvertures centrales des semelles, la roue dentée de sortie étant située dans le plan de symétrie du boîtier inférieur ; et les points de fixation des semelles entre elles et sur le châssis d'un outil à entraîner, sont disposés de façon symétrique par rapport à l'axe de symétrie du boîtier inférieur.

De préférence, l'arbre intermédiaire du boîtier supérieur porte une roue dentée pour coopérer avec une roue dentée correspondante du dernier arbre parallèle et deux roues dentées adjacentes qui coopèrent avec deux roues dentées correspondantes montées folles sur un arbre aval parallèle à l'arbre intermédiaire; l'arbre aval porte en outre un crabot qui est solidaire en rotation de cet arbre et qui coulisse axialement entre les roues dentées folles au moyen d'un levier extérieur au boîtier pour coopérer avec l'une ou l'autre de ces roues dentées et entraîner l'arbre aval selon l'une de deux vitesses différentes, et la roue dentée de sortie du boîtier supérieur est montée sur l'arbre aval.

Avantageusement, la semelle du boîtier supérieur comporte au moins deux pions de centrage pour le boîtier inférieur, qui sont disposés symétriquement par rapport à l'axe de symétrie du boîtier inférieur. La transmission mécanique ainsi définie présente de nombreux avantages pratiques : l'arbre d'entrée étant accessible par ses deux extrémités, la transmission peut être disposée à l'avant ou à l'arrière d'un tracteur et être reliée aisément à une prise de force de ce dernier ; les roues dentées d'entrée étant permutables, la transmission s'adapte simplement à des moteurs de tracteurs agricoles délivrant, à la prise de force, l'une des vitesses standard de 540 tr/mn et 1000 tr/mn. L'arbre intermédiaire constitue une prise de force auxiliaire pour entraîner par exemple une pompe ou un ventilateur ; il constitue aussi un arbre d'entrée latéral facilitant un jumelage de deux transmissions disposées en parallèle, comme précisé par la suite. La décomposition de la transmission en deux boîtiers et la symétrie de l'assemblage permet le retournement du boîtier supérieur par rapport au boîtier inférieur, notamment pour disposer l'arbre intermédiaire d'un côté ou de l'autre de la transmission, et pour choisir l'extrémité de l'arbre d'entrée approprié, l'une des extrémités étant plus particulièrement destinée à la prise du mouvement et l'autre à la restitution du mouvement. La description qui va suivre et qui ne présente aucun caractère limitatif, doit être lue en regard des figures annexées parmi lesquelles :

La figure 1 représente schématiquement la chaîne cinématique d'une transmission selon l'invention, rapportée sur un plan unique à partir de la figure 3.

La figure 2 est une vue en élévation et de côté de cette transmission, disposée dans des boîtiers.

La figure 3 est une vue de face de la transmission de la figure 2.

La figure 4 est une vue de face d'un accouplement de deux transmissions selon l'invention.

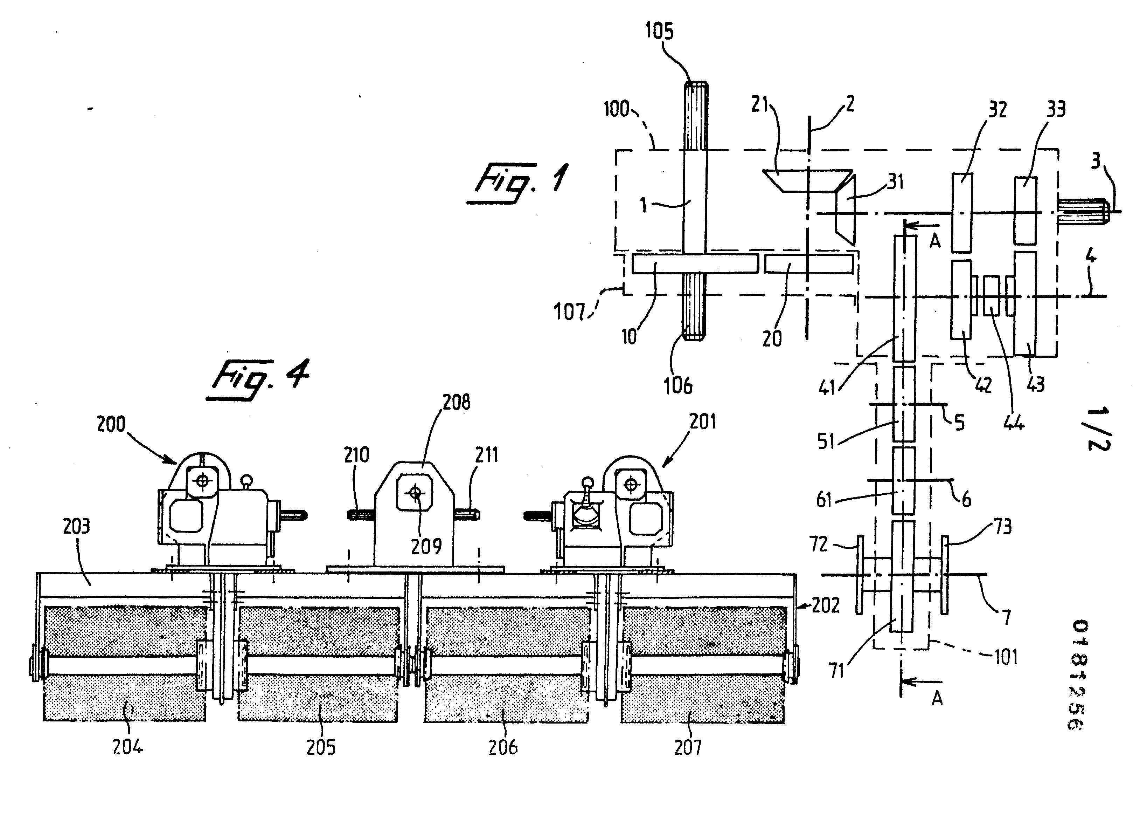

La chaîne cinématique de la figure 1 comprend
un arbre d'entrée 1 cannelé à ses deux extrémités pour
être relié par l'une d'elles à la prise de force d'un
tracteur. L'arbre d'entrée 1 porte une roue dentée 10,
laquelle coopère avec une roue dentée 20 portée par un
second arbre 2 parallèle à l'arbre d'entrée 1. Les roues
dentées 10 et 20 sont démontables et permutables, de façon
à obtenir, pour deux vitesses de rotation différentes de
l'arbre d'entrée 1, une vitesse de rotation du second arbre 2 sensiblement constante. En général, la vitesse de
rotation de l'arbre d'entrée 1 est de 540 ou 1000 tr/mn.
S'il fallait adapter la transmission à un nombre de vitesses
de l'arbre d'entrée 1 supérieur à deux, on choisirait un
plus grand nombre d'arbres parallèles pour pouvoir réaliser
les permutations de roues dentées nécessaires.

L'arbre 2 porte également une roue conique 21
qui coopère avec une roue conique 31 portée par un arbre
intermédiaire 3 perpendiculaire à cet arbre 2. L'arbre
intermédiaire 3 présente une extrémité cannelée destinée
soit à être reliée à une prise de force, soit à entraîner
un équipement auxiliaire tel qu'une pompe ou un ventilateur.
L'arbre intermédiaire 3 porte aussi deux roues dentées 32
et 33 de changement de vitesse qui coopèrent respectivement
avec deux roues dentées 42, 43 montées folles sur un arbre
4 parallèle à l'arbre 3. Un crabot 44 est monté sur l'arbre
4 de façon à pouvoir coulisser axialement au moyen d'un
levier non représenté, entre les roues dentées folles 42
et 43. Ce crabot 44 est solidaire en rotation de l'arbre
4 et coopère latéralement, de façon connue en soi, avec
l'une ou l'autre des roues dentées folles 42 et 43 ; il
permet ainsi d'entraîner l'arbre 4 selon deux vitesses
différentes, ces vitesses correspondant à deux vitesses
différentes d'utilisation des rotors de l'outil agricole
à entraîner. L'arbre 4 porte encore une roue dentée 41,
laquelle entraîne un train de trois roues dentées ou
pignons 51, 61 et 71 portés par trois arbres parallèles
5, 6, 7. La roue dentée 41 et les trois pignons 51 à 71 sont disposés dans un plan commun ou plan de symétrie A. L'arbre 7 porte à chaque extrémité un plateau 72, 73 par lequel il peut être relié au rotor d'un outil agricole à entraîner.

Les arbres 1 à 4 de la présente transmission et leurs roues dentées et pignons sont regroupés dans un boîtier supérieur désigné dans son ensemble par la référence 100; les roues dentées permutables 10 et 20 sont accessibles de l'extérieur grâce à un carter démontable 107 fixé sur le boîtier supérieur 100. Quant aux arbres 5 et 7 et leurs pignons, ils sont regroupés dans un boîtier inférieur désigné dans son ensemble par la référence 101. Les roues dentées 10 et 41 constituent donc respectivement les roues d'entrée et de sortie du boîtier supérieur et les pignons 51 et 71 respectivement les pignons d'entrée et de sortie du boîtier inférieur.

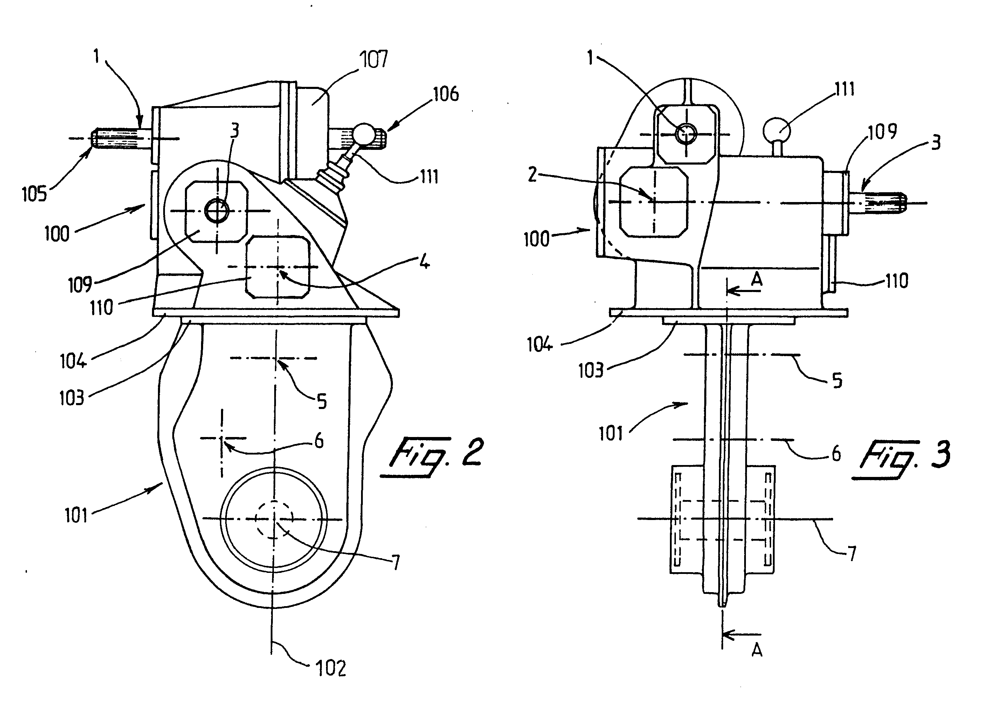

Le boîtier inférieur 101 (figures 2 et 3), est symétrique par rapport au plan de symétrie A précité des pignons qui sont logés dans ce boîtier, et portés par les arbres 5, 6 et 7. Ce boîtier inférieur 101 est ouvert de part et d'autre de son plan de symétrie A, au niveau de l'arbre de sortie 7, pour relier à celui-ci deux rotors d'un outil agricole. La ligne joignant les arbres 5 et 7 (figure 2) constitue un axe de symétrie 102 pour les pignons d'entrée et de sortie du boîtier inférieur 101, et la semelle 103 de ce boîtier est perpendiculaire à l'axe de symétrie 102.

Le boîtier supérieur 100 repose par sa semelle 104 sur la semelle 103 du boîtier inférieur. Ces deux semelles présentent une ouverture centrale pour permettre une coopération entre la roue dentée de sortie 41 du boîtier supérieur 100 et le pignon d'entrée 51 du boîtier inférieur 101 (figure 1). Par ailleurs, tous les points de fixation des semelles entre elles et sur le châssis d'un outil agricole, sont disposés de façon symétrique par rapport à l'axe de symétrie 102 du boîtier inférieur 101. En outre, la semelle 104 du boîtier supérieur 100 comporte au moins deux pions, non représentés, de centrage du boîtier inférieur 101, qui sont disposés symétriquement par rapport à l'axe de sumétrie 102 du boîtier inférieur, de façon à autoriser une rotation de 180° du boîtier supérieur 100 par rapport au boî-

0181256

tier inférieur 101.

L'arbre d'entrée 1 du boîtier supérieur 100 est disposé parallèlement aux semelles 103, 104 et au plan de symétrie A du boîtier inférieur 101 ; il possède deux extrémités 105, 106 saillant hors du boîtier supérieur 100. Les roues dentées 10 et 20 des arbres 1 et 2 sont accessibles de l'extérieur moyennant le démontage du carter 107 situé du côté de l'extrémité 106, afin de les permuter si nécessaire compte tenu de la vitesse de rotation communiquée par la prise de force du tracteur. L'arbre intermédiaire 3 est disposé perpendiculairement au plan de symétrie A du boîtier inférieur 101 et il est saillant à l'extérieur du boîtier supérieur 100 par une seule de ses extrémités. Au droit des arbres 3, 4 sont disposés deux couvercles 109, 110 pour l'accès à leurs roues dentées. Le levier du changement de vitesse permettant de déplacer le crabot 44 du boîtier supérieur 100 (fig. 1) est désigné par la référence 111 : il est disposé sur le boîtier supérieur 100 sensiblement au niveau du crabot 44.

La figure 4 illustre l'une des applications avantageuses de la transmission selon l'invention. Elle représente un accouplement de deux transmissions 200, 201 en parallèle. Chaque transmission est fixée sur le châssis 203 d'un outil agricole 202 et elle est reliée à deux des quatre rotors 204, 205, 206, 207 de cet outil. La transmission 201 est identique à la transmission 200 mais son boîtier supérieur a été retourné de 180° par rapport au boîtier inférieur. De cette façon, les deux transmissions sont entraînées par une transmission auxiliaire 208 connue en elle-même et entraînée par la prise de force d'un tracteur, qui est disposée entre les deux transmissions selon l'invention et fixée sur le châssis 203 de l'outil agricole 202. La transmission auxiliaire 208 possède un arbre central 209 destiné à être relié à la prise de force d'un tracteur et deux arbres de prise de force latéraux 210, 211 destinés à être reliés aux arbres intermédiaires des transmissions 200, 201 selon l'invention. Dans ce cas, l'arbre d'entrée de ces transmissions est inopérant.

L'accouplement représenté sur la figure 4 est réalisable grâce à la symétrie des fixations des boîtiers supérieur et inférieur des transmissions et grâce à celle de la roue de sortie 41 du boîtier supérieur et du pignon d'entrée 51 du boîtier inférieur (fig. 1). La transmission selon l'invention s'adapte ainsi à des outils agricoles d'envergure et de puissance variables. On notera que chaque transmission entraîne toujours deux rotors, de façon à répartir les efforts et à assurer une meilleure fiabilité ; cependant, les deux rotors peuvent être différents et asymétriques.

En variante, ces rotors peuvent être disposés l'un derrière l'autre, d'un même côté du plan de symétrie de la transmission, leur entraînement s'effectuant toutefois de part et d'autre de ce plan de symétrie ; dans ce cas, l'un des rotors est relié directement à l'un des plateaux d'entraînement 72, 73 du boîtier inférieur, et l'autre rotor est relié à l'autre plateau par un jeu de roues dentées coopérant entre elles ou par l'intermédiaire de chaînes ou de courroies : de ce fait, les deux rotors peuvent être entraînés à des vitesses et selon des sens identiques ou différents.

La symétrie de la transmission selon l'invention autorise aussi son retournement complet de 180°, la position relative des deux boîtiers étant inchangée.

8                           0181256

REVENDICATIONS

1.- Transmission mécanique polyvalente à roues dentées ou à poulies, notamment destinée à être fixée sur le châssis d'un outil agricole et à être entraînée par la prise de force d'un tracteur, comprenant un arbre d'entrée qui est saillant à l'extérieur de la transmission par une extrémité et qui coopère avec un ou plusieurs arbres parallèles au premier et disposés successivement en aval par l'intermédiaire de roues dentées démontables et permutables, un arbre transversal auxdits arbres parallèles qui est relié au dernier de ces arbres parallèles par des roues dentées coniques et qui entraîne un train de pignons ou poulies disposés les uns derrière les autres et parallèles entre eux, le pignon de sortie de ce train de pignons étant accessible par ses deux faces principales pour être relié à deux rotors d'outils à entraîner, et un arbre intermédiaire qui est disposé entre ledit arbre d'entrée et ledit train de pignons et qui est saillant à l'extérieur de la transmission par une extrémité, transmission caractérisée en ce que ledit arbre d'entrée (1) est également saillant à l'extérieur de la transmission par son autre extrémité, en ce que les pignons (51, 61, 71) dudit train de pignons sont tous disposés sensiblement dans un plan commun ou plan de symétrie(A) et sont logés dans un boîtier inférieur (101) indépendant du reste de la transmission, ledit boîtier inférieur (101) présentant une semelle (103) par laquelle il est fixé à la semelle (104) d'un boîtier supérieur (100), les points de fixation des semelles (103, 104) entre elles et sur le châssis de l'outil à entraîner étant disposés de façon symétrique par rapport à un axe de symétrie (102), lequel passe par les axes de rotation (5, 7) d'un pignon d'entrée (51) et dudit pignon de sortie (71) du boîtier inférieur (101).

2.- Transmission selon la revendication 1, caractérisée en ce que ledit arbre intermédiaire (3) du boîtier supérieur (100) porte une roue dentée conique (31) pour coopérer avec une roue dentée correspondante (21) dudit dernier arbre parallèle (2) et deux roues dentées adjacentes (32, 33) qui coopèrent avec deux roues dentées correspondantes (42, 43) montées folles sur un arbre aval (4) parallèle audit arbre intermédiaire (3), en ce que ledit arbre aval (4) porte en outre un crabot (44) qui est solidaire en rotation de cet arbre et qui coulisse axialement entre lesdites roues dentées folles (42, 43) au moyen d'un levier (111) extérieur au boîtier (100) pour coopérer avec l'une ou l'autre de ces roues dentées (42, 43) et entraîner ledit arbre aval (4) selon l'une de deux vitesses différentes, et en ce que ledit arbre aval (4) porte encore une roue dentée de sortie (41) du boîtier supérieur qui est destinée à coopérer avec ledit train de pignons du boîtier inférieur.

3.- Transmission selon la revendication 1 ou la revendication 2, caractérisée en ce que la semelle (104) dudit boîtier supérieur (100) comporte au moins deux pions de centrage pour ledit boîtier inférieur (101), qui sont disposés symétriquement par rapport audit axe de symétrie (102) du boîtier inférieur (101), de façon à autoriser une rotation de 180° du boîtier supérieur (100) par rapport au boîtier inférieur (101).

*Fig. 1*

*Fig. 4*

1/2

0181256

Fig. 2

Fig. 3

0181256

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | DE-C- 438 698 (ROTHARDT) <br> * En entier * | 1 | A 01 B 33/08 <br> F 16 H 57/02 |
| Y | DE-C-3 119 526 (AMAZONEN-WERKE H. DREYER) <br> * En entier * | 1 | |
| A | | 2 | |
| A | WO-A-8 201 050 (ANDERSON STRATHCLYDE LTD.) <br> * Page 2, ligne 27 - page 3, ligne 35; figures 1-6 * | 1 | |
| A | FR-A-2 092 953 (REBER) | | |
| A | FR-A-2 019 752 (BERDRIN) | | DOMAINES TECHNIQUES RECHERCHES (Int. Cl.4) <br><br> A 01 B <br> F 16 H |
| A | FR-A-1 203 335 (ROTARY HOES) | | |
| A | FR-A-2 128 873 (VAN DER LELY) | | |
| A | FR-A-1 236 951 (GEWERKSCHAFT EISENHÜTTE WESTFALIA) | | |

Le présent rapport de recherche a été établi pour toutes les revendications

| Lieu de la recherche <br> LA HAYE | Date d'achèvement de la recherche <br> 10-12-1985 | Examinateur <br> VERDOODT S.J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82